# EUROPEAN PATENT APPLICATION

(11) **EP 1 587 215 A1**
(43) Date of publication of application: **19.10.2005**
(21) Application number: 05008348.4
(22) Date of filing: 18.04.2005
(51) Int. Cl.: H03K 19/0185, H01S 5/042

(54) **Image data transmission circuit and image data display system**

(30) Priority: 16.04.2004 JP 2004121205
(71) Applicant: SANYO ELECTRIC CO., LTD., Moriguchi-shi, Osaka 570-8677 (JP)
(72) Inventor: Akima, Isao, Ogaki-shi Gifu-ken (JP)
(74) Representative: Glawe, Delfs, Moll

(57) **Abstract**

This invention enables the image data transmission with high frequency without having the EMI noise or the deterioration of SN ratio. The image data SR is inputted to the electric current driving circuit (30) after it is modulated into the pulse width modulation signal SRP by the pulse width modulation circuit (10). The electric current driving circuit (30) outputs the first and the second driving electric current (I1, I2) to the transmission lines (41, 42) based on the pulse width modulation signal SRP. The first and the second driving electric currents (I1, I2) have the same magnitude but the opposite directions. The pixels (GS1, GS2) with the electric current driven luminescent element (L1, L2) are driven by the first and second driving electric currents (I1, I2).

## Description

### BACKGROUND OF THE INVENTION

### Field of Invention

This invention relates to a transmission circuit that transmits image data from one circuit to another and to a display system with the transmission circuit.

### Description of Related Art

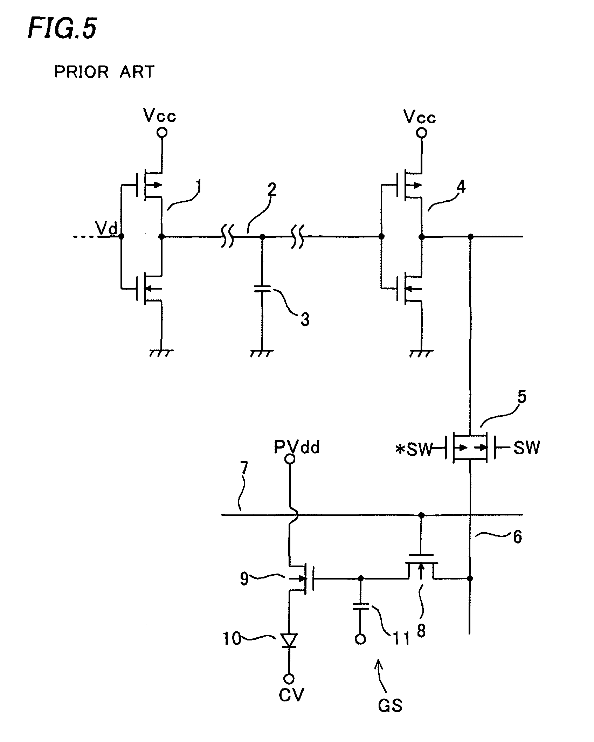

CMOS type voltage signal transmission circuit is widely used for transmitting image data. Fig. 5 shows an example of a transmission circuit for transmitting image data Vd to a display panel. The reference numeral 1 indicates a transmitter circuit formed in an image signal processing LSI that amplifies and outputs image data Vd, and that is configured with a CMOS inverter. The reference numeral 2 indicates a transmission line connected to the transmitter circuit 1, and the reference numeral 3 a transmission line capacitance attached to the transmission line 2. The reference numeral 4 indicates a receiver circuit formed in a display panel side that amplifies the received image data Vd transmitted from the transmitter circuit 1 through the transmission line 3.

The reference numeral 5 denotes a CMOS type transfer gate controlled by a switching signals (a horizontal scanning signal) SW, *SW (*SW is an inverted signal of SW). The CMOS type transfer gate 5 turns on and off according to the switching signals SW, *SW and transmits the image data Vd received by the receiver circuit 4 to a drain line 6 of the display panel. The reference numeral 7 indicates a gate line that receives a gate signal (a vertical scanning signal) from a gate driver (not shown in this figure) A pixel GS is formed near the point where the drain line 6 and the gate line 7 intersect. Although only one pixel GS is shown in Fig. 5, a plurality of pixels GS is formed in a matrix configuration on the display panel.

The pixel GS performs switching according to the gate signal. The pixel GS has a pixel selection TFT8 (Thin Film Transistor) for writing the image data in the pixel GS, a driver TFT9, a self luminescent element 10 (for example, a LED element, an organic EL element, or an inorganic EL element) that emits light by the driving electric current fed from the driver TFT9, and a capacitor 11 for holding the image data written in the pixel GS for one horizontal period.

This CMOS type signal transmission circuit is capable of making a display on the display panel based on the image data Vd that is processed by an image signal processing LSI and transmitted through high-speed transmission from the transmitter circuit 1 to the receiver circuit 4 in the display panel side through the transmission line 2.

However, the CMOS type signal transmission circuit basically performed the transmission of signal by charging and discharging the transmission line capacitance 3 through the transmitter circuit 1. The gradation information for each image signal is a voltage information. Therefore, this causes problems including the radiation of EMI noise, the deterioration of the SN ratio of the voltage signal, the delayed transmission and the deterioration of image quality due to the varied skew among signals, when the signal frequency of the image data Vd is a high range, i.e., two-digit MHz frequencies. This makes the application of the transmitter circuit to the image equipment of private use very difficult.

It is an object of this invention to provide an improved transmission circuit.

### SUMMARY OF THE INVENTION

The solution according to the invention lies in the features of the independent claims and preferably in those of the dependent claims.

The invention provides an image data transmission circuit that includes a first transmission line and a second transmission line. At least part of the first and second transmission lines are substantially parallel to each other. The circuit also includes an electric current driving circuit that supplies a first current to the first transmission line based on image data and receives a second current from the second transmission line based on the image data. The first and second currents have substantially a same magnitude. The circuit also includes an electric current driven luminescent element driven by the electric current driving circuit to emit light.

The invention also provides an image data display system that includes an image signal processing LSI including a pulse width modulation circuit generating a pulse width modulation signal having a modulated pulse width based on image data, and a first transmission line and a second transmission line. At least parts of the first and second transmission lines are substantially parallel to each other. The device also includes an electric current driving circuit that supplies a first current to the first transmission line based on the pulse width modulation signal and receives a second current from the second transmission line based on the pulse width modulation signal. The first and second currents have substantially a same magnitude. The device further includes an electric current driven luminescent element driven by the electric current driving circuit to emit light.

The invention provide another image display system that includes an image signal processing LSI including a pulse width modulation circuit generating a pulse width modulation signal having a modulated pulse width based on image data, a display panel portion comprising an electric current driven luminescent element, and a first transmission line and a second transmission line that connect the image processing LSI and the display panel portion. At least parts of the first and second transmission lines are substantially parallel to each other. The device also includes an electric current driving circuit that supplies a first current to the first transmission line based on the pulse width modulation signal and receives a second current from the second transmission line based on the pulse width modulation signal. The first and second currents have substantially a same magnitude, and the electric current driven luminescent element is driven by the first current or the second current to emit light.

According to the invention, image data is transmitted by having the first and second driving currents run through the first and second transmission lines based on the actual image data. By using two lines, that are substantially parallel to each other, noise induced by the driving currents is cancelled, thus minimizing radiation of EMI noise. The detrimental effects of such noise, like deterioration of the SN ratio, delayed transmission due to differences in the parasitic capacitance of the transmission lines or the skew among signals can therefore be avoided. Thus, an improved transmission of image data with high frequency is achieved.

### BRIEF DESCRIPTION OF THE DRAWINGS

Fig. 1 is a circuit diagram of the image data transmission circuit of an embodiment of this invention.
Fig. 2 shows an operation timing of the image data transmission circuit of an embodiment of this invention.
Fig. 3 is a system diagram of the image data display system of an embodiment of this invention.
Fig. 4 is another system diagram of the image data display system of an embodiment of this invention.
Fig. 5 is a circuit diagram of the CMOS type voltage signal transmission circuit of prior arts.

### DETAILED DESCRIPTION OF THE INVENTION

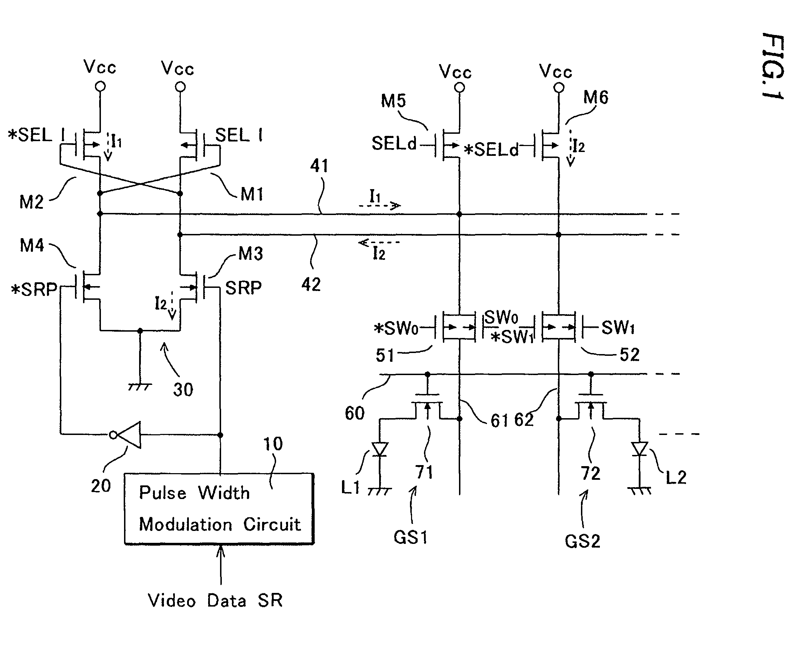

Next, an image data transmission circuit of an embodiment of this invention will be explained by referring to figures. Fig. 1 is a circuit diagram of the image data transmission circuit of this embodiment. The image data includes image data corresponding R (red), G (green), and B (blue). However, only the transmission circuit for image data SR corresponding to R will be explained for the sake of simplicity. The transmission circuits for the image data SG corresponding to G and the image data SB corresponding to B have the same configuration.

The reference numeral 10 is a pulse width modulation circuit that modulates the image data SR with a certain bit number based on the gradation number into a pulse width modulation signal SRP with a modulated pulse width according to the size of the image data SR for a certain period.

The reference numeral 30 is a driving electric current circuit that generates first and second driving currents I1, I2 corresponding to the pulse width modulation signal SRP. This circuit includes a pair of P-channel type MOS transistors M1, M2 and a pair of N-channel type MOS transistors M3, M4 making a differential transistor pair. A source voltage Vcc is applied to each source of the MOS transistors M1, M2. A gate of the MOS transistors M1 is connected to a drain of the MOS transistors M2 and a gate of the MOS transistors M2 is connected to a drain of the MOS transistors M1.

The pulse width modulation signal SRP is applied to the gate of the N-channel type MOS transistor M3, and the inverted pulse width modulation signal *SRP inverted by an inverter 20 is applied to the gate of the N-channel type MOS transistor M4.

A first transmission line 41 is connected to the drain of the N-channel type MOS transistor M4, and a second transmission line 42 is connected to the drain of the N-channel type MOS transistor M3. The first transmission line 41 and the second transmission line 42 are adjacent to each other and disposed extending from the transmitter side to the receiver side. The first and second driving electric currents I1 and I2 are supplied to the first and second transmission lines respectively. The first and second driving electric currents I1 and I2 have the same magnitude but have the opposite direction from each other.

The drain of the P-channel type MOS transistor M5 is connected to the first transmission line 41 and the drain of the P-channel type MOS transistor M6 is connected to the second transmission line 42 on the receiver side. The source voltage Vcc is applied to the source of the P-channel type MOS transistor M5 and a delayed gate signal SELd that is a gate signal SEL1 of the P-channel type MOS transistor M1 delayed for a certain period by a delay circuit not shown in the figure is applied to the gate of the P-channel type MOS transistor M5. Likewise, the source voltage Vcc is applied to the source of the P-channel type MOS transistor M6 and a delayed gate signal *SELd that is a gate signal *SEL1 of the P-channel type MOS transistor M2 delayed for a certain period by the delay circuit not shown in the figure is applied to the gate of the P-channel type MOS transistor M6.

A CMOS transfer gate 51 that performs switching according to a switching signals SWO, *SW0 (*SW0 is an inverted signal of the SW0) and that supplies the first driving electric current I1 to a drain line 61 is connected to the first transmission line 41 on the receiver side. The switching signals SW0 and *SW0 are horizontal scanning signal and supplied from a horizontal driving circuit not shown in the figure.

A pixel GS1 forming a pixel region of the display panel is disposed near the point where the drain line 61 and the gate line 60 intersect. The pixel GS1 has a pixel selection TFT 71 and an electric current driven luminescent element L1 (for example, a LED element, an organic EL element or an inorganic EL element). The gate line 60 is connected to the gate of the pixel selection TFT 71. A vertical scanning signal is supplied to the gate line 60 from a vertical scanning circuit not shown in the figure. The pixel selection TFT 71performs switching according to the vertical scanning signal, supplying the first driving electric current I1 coming from the drain line 61 to the electric current driven luminescent element L1.

Likewise, a CMOS transfer gate 52 that performs switching according to switching signals SW1, *SW1 (*SW1 is an inverted signal of the SW1) and that supplies the second driving electric current I2 to a drain line 62 is connected to the second transmission line 42 on the receiver side. The switching signals SW1 and *SW1 are also the horizontal scanning signal.

The pixel GS2, part of the pixel region of the display panel, is disposed near the point where the drain line 62 and the gate line 60 intersect. The pixel GS2, like the pixel GS1, has the pixel selection TFT 72 and the electric current driven luminescent element L2 (for example, a LED element, an organic EL element or an inorganic EL element). Only a pair of GS1 and GS2 is shown in Fig. 1. However, the pixels with the same configuration are disposed in row direction as well as in the column direction in an actual display panel.

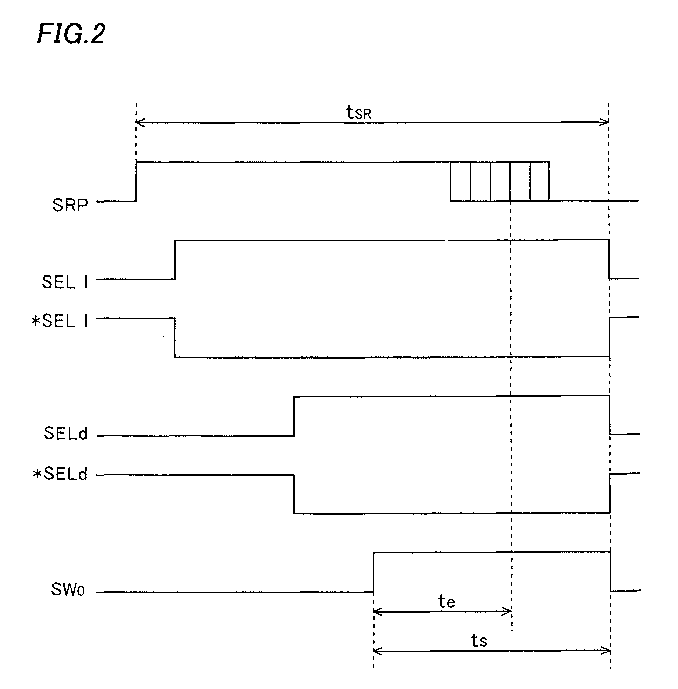

Next, the operation of the image data transmission circuit will be explained by referring to the operation timing chart of Fig. 2.

The signal period tSR of the pulse width modulation signal SRP is determined. The pulse width of the pulse width modulation signal SRP is modulated in this period based on the size of the original image data SR. The N-channel type MOS transistor M3 of the electric current driving circuit 30 turns on when the pulse width modulation circuit SRP becomes high. Then, after a little while, the P-channel type MOS transistor M2 turns on when the gate signal *SEL1 of the P-channel type MOS transistor M2 becomes low. Then, the P-channel type MOS transistor M1 turns off when the gate signal SEL1 of the P-channel type MOS transistor M1 becomes high.

Then, the delay gate signal SELd of the P-channel type MOS transistor M5 becomes high and the delay gate signal *SELd of the P-channel type MOS transistor M6 also becomes low. The P-channel type MOS transistor M5 turns off and the P-channel type MOS transistor M6 turns on.

The first driving current I1 runs through the first transmission line 41 through the P-channel type MOS transistor M2 and the second driving current I2, which has the same magnitude as but the opposite direction from the first driving current I1, runs through the second transmission line 42 through the P-channel type MOS transistor M6. The second driving current I2 goes to the N-channel type MOS transistor M3 of the electric current driving circuit 30. The impedance of the MOS transistor as well as that of first and second transmission lines 41, 42 are adjusted to make the magnitude of the first and second driving currents I1 and I2 the same.

The switching signal SW0 becomes high after the first and second driving currents I1, I2 are stabilized. Then, the CMOS transfer gate 51 turns on, feeding the first driving current I1 to the drain line 51 from the transmission line 41 through the CMOS transfer gate 51. The first driving current I1 is further fed to the electric current driven luminescent element L1 through the pixel selection TFT 71. A signal effective period ts, during which the pulse width modulation signal SRP is effective to the luminescent display, is the duration starting from the time when the switching signal SW0 becomes high and finishing at the end of the signal duration tSR. The pulse width of the pulse width modulation signal SRP is modulated during the signal effective period ts.

The first and second driving currents I1, I2 are fed to the electric current driven luminescent element L1, making the electric current driven luminescent element L1 emit the light according to the magnitude of the electric current. This magnitude is in proportion to the length of the pulse period of the pulse width modulation signal SRP, which corresponds to the period of the high level in this embodiment.

The image data is transmitted from the transmitter side to the receiver side by letting the first and second driving currents I1, I 2 based on the image data run through the first and second transmission lines 41, 42 in this image data transmission circuit. Therefore, the noise with the driving currents I1 and I2 is canceled, preventing the radiation of EMI noise, the deterioration of the SN ratio, the delayed transmission due to the difference in the parasitic capacitance of the transmission lines, or the skew among signals, achieving the transmission of the image data with high frequency.

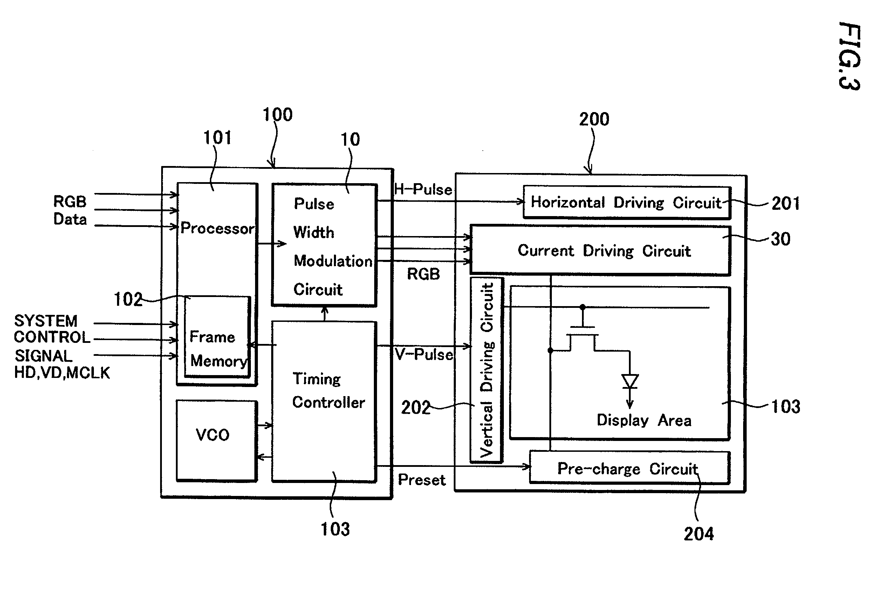

Next, the image data display system of an embodiment of this invention will be explained by referring to Fig. 3. The image data transmission circuit mentioned above is used in the image data display system. The reference numeral 100 denotes the image signal processing LSI that has a processor 101 for performing a certain signal processing to the RGB image data supplied from outside, a frame memory for storing the processed image data, a timing controller 103 for generating various timing signals of the image signal processing LSI and various timing signals of the display panel 200, and a pulse width modulation circuit 10.

The RGB image data supplied from outside is changed into the image data with a certain bit number according to the gradation number and stored in the frame memory 102 for each frame. The image data stored in the frame memory 102 is outputted to the pulse width modulation circuit 10 with a certain timing, generating the RGB pulse width modulation signal.

The RGB pulse width modulation signal generated by the pulse width modulation circuit 10 is transmitted to the display panel 200. The display panel 200 has the electric current driving circuit 30 and the first and the second transmission lines 41, 42. The display panel also has a horizontal driving circuit 201, a vertical driving circuit 202, a display region 203, and a pre-charge circuit 204 of the drain line.

This image data transmission system is suitable for a relatively large system with a transmission distance of above 10 cm of the image data and a transmission frequency of above 10MHz. The control of the transmission of the image signal at the side of the LSI 100, which is for signal processing, is extremely difficult when the transmission frequency is high because the signal transmission is significantly delayed and the electro magnetic radiation is increased. Therefore, the signal transmission from the image signal processing LSI 100 to the display panel 200 is performed through the pulse width modulation transmission, and the signal transmission within the side of the display panel is done by the electric currents with two opposite directions in this embodiment.

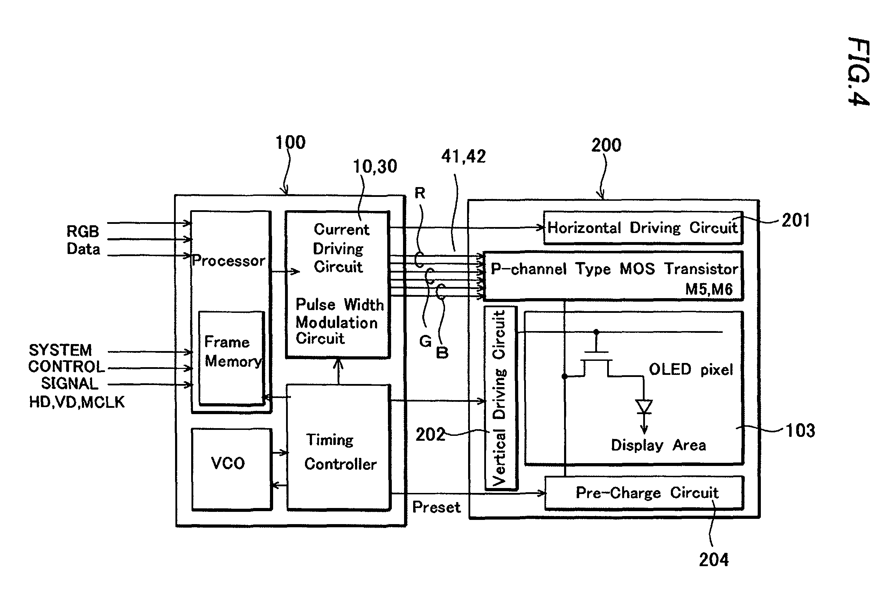

Another image data transmission system, which will be described below, can also be feasible depending on the transmission condition including the impedance of the transmission line. Another embodiment of the image data display system of this invention will be explained by referring to Fig. 4. The image data transmission system described above is also applied to this image data display system. This system has the pulse width modulation circuit 10 and the electric current driving circuit 30 of the transmitter side in the image signal processing LSI 100 and the P-channel type MOS transistors M5 and M6 of the receiver side in the display panel 200. The first and second transmission lines 41, 42 corresponding to RGB are formed between the image signal processing LSI 100 and the display panel 200. This image data display system is suitable for a small size display device including cell phone and DSC since the effect of the transmission distance and the frequency are relatively small.

This system is especially effective if applied to the display device with an organic EL element because image signal processing LSI 100 can control the entire display region 203 of the display panel 200 with uniform electric current. Since it is not necessary to change the voltage for the electric current, the direct control of the display pixel TFT is possible with a relatively simple circuit configuration, achieving the better S/N ratio and the improved display with a high quality gradation with little electro magnetic radiation such as EMI.

## Claims

1. An image data transmission circuit comprising:
- a first transmission line (41) and a second transmission line (42), at least parts of the first and second transmission lines (41, 42) being substantially parallel to each other;
- an electric current driving circuit (30) that supplies a first current to the first transmission line (41) based on image data and receives a second current from the second transmission line (42) based on the image data, the first and second currents having substantially a same magnitude; and
- an electric current driven luminescent element (L1, L2) driven by the electric current driving circuit (30) to emit light.

2. The image data transmission circuit of claim 1, further comprising a pulse width modulation circuit (10) generating a pulse width modulation signal having a modulated pulse width for a predetermined period based on the image data and supplying the pulse width modulation signal to the electric current driving circuit (30) so that the electric current driving circuit (30) manipulates the first and second currents based on the modulated pulse width.

3. The image data transmission circuit of claim 1 or 2, wherein the electric current driven luminescent element (L1, L2) comprises an LED element, an organic EL element or an inorganic EL element.

4. An image data display system comprising:
- an image signal processing LSI (100) comprising a pulse width modulation circuit (10) generating a pulse width modulation signal having a modulated pulse width based on image data;
- a first transmission line (41) and a second transmission line (42), at least parts of the first and second transmission lines (41, 42) being substantially parallel to each other;
- an electric current driving circuit (30) that supplies a first current to the first transmission line (41) based on the pulse width modulation signal and receives a second current from the second transmission line (42) based on the pulse width modulation signal, the first and second currents having substantially a same magnitude; and
- an electric current driven luminescent element (L1, L2) driven by the electric current driving circuit to emit light.

5. The image data display system of claim 4, further comprising a switching circuit (51, 52) supplying the first current or the second current to the electric current driven luminescent element (L1, L2) based on a switching signal.

6. The image data display system of claim 4 or 5, wherein the electric current driven luminescent element (L1, L2) comprises an LED element or, organic EL element or an inorganic EL element.

7. An image display system comprising:
- an image signal processing LSI (100) comprising a pulse width modulation circuit (10) generating a pulse width modulation signal having a modulated pulse width based on image data;
- a display panel portion (103) comprising an electric current driven luminescent element (L1, L2);
- a first transmission line (41) and a second transmission line (42) that connect the image processing LSI (100) and the display panel portion (103), at least parts of the first and second transmission lines (41, 42) being substantially parallel to each other; and
- an electric current driving circuit (30) that supplies a first current to the first transmission line (41) based on the pulse width modulation signal and receives a second current from the second transmission line (42) based on the pulse width modulation signal, the first and second currents having substantially a same magnitude and the electric current driven luminescent element (L1, L2) being driven by the first current or the second current to emit light.

8. The image data display system of claim 7, wherein the display panel portion comprises a switching circuit (51, 52) supplying the first current or the second current to the electric current driven luminescent element (L1, L2) based on a switching signal.

9. The image data display system of claim 7 or 8, wherein the electric current driven luminescent element (L1, L2) comprises an LED element, an organic EL element or an inorganic EL element.
